Europäisches Patentamt

European Patent Office

Office européen des brevets

(19)

(11) EP 1 128 377 A1

(12) **EUROPEAN PATENT APPLICATION**

(43) Date of publication:
29.08.2001 Bulletin 2001/35

(51) Int Cl.⁷: **G11B 17/22**, G11B 15/68

(21) Application number: 01301660.5

(22) Date of filing: 23.02.2001

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | (72) Inventors:<br>• **Foslien, Wayne E.**<br>  **Greeley, CO 80634 (US)**<br>• **Gardner, Richard L., Jr.**<br>  **Greeley, CO 80634 (US)** |
| (30) Priority: **28.02.2000 US 514821** | (74) Representative: **Colgan, Stephen James et al**<br>**CARPMAELS & RANSFORD** |
| (71) Applicant: **Hewlett-Packard Company**<br>**Palo Alto, CA 94304 (US)** | **43 Bloomsbury Square**<br>**London WC1A 2RA (GB)** |

(54) **A method and apparatus for measuring the cartridge magazine insertion distance with a barcode reader**

(57)     A method and apparatus for measuring the insertion distance of a data cartridge magazine in an auto-changer, using a barcode reader. A target with a known length is attached to each data cartridge magazine. The barcode reader measures the length of the target. Using the measured length and stored barcode reader system information, the auto-changer can calculate the insertion distance of the data cartridge magazine.

FIG.4

EP 1 128 377 A1

**Description**

**FIELD OF THE INVENTION**

The present invention relates generally to mass storage auto-changers and more specifically to a method of using a barcode reader for detecting whether a data cartridge magazine has been correctly inserted into the auto-changer.

**BACKGROUND OF THE INVENTION**

Jukebox storage devices (also called mass storage auto-changers) typically contain a number of data cartridges. Typically each data cartridge is labeled such that the jukebox storage device can identify and keep track of the location of each data cartridge. Typically each data cartridge is labeled with a barcode and the jukebox storage device contains an optical system that can read bar codes, sometimes called a barcode reader. These data cartridges are typically stored in cartridge magazines. The magazines typically contain a number of slots or spaces where the data cartridges can be stored. The jukebox may contain a plurality of magazines. Typically the magazines are removable from the jukebox storage device for easier access to the magazines so the magazines can be loaded with data cartridges.

When the magazines are inserted into the auto-changer, the auto-changer typically detects the insertion distance, also called the z-position, of the magazine electronically with a device such as an optical interrupt sensor. The auto-changer will also typically detect the x and y location of the magazine for alignment of the picker with respect to the data cartridges contained in the magazine. The z-position of the magazine needs to be detected to ensure that the magazine was completely inserted. If the magazine was not completely inserted normal auto-changer operations can not be resumed.

The optical interrupt sensor typically works by shining a light onto a sensor. When the magazine is completely inserted into the auto-changer the magazine blocks the light and the sensor detects the change in light hitting the sensor. This method of detection requires an optical interrupt sensor for each magazine in the auto-changer. Each optical interrupt sensor requires a light source, a sensor to detect the light, and cables to connect the optical interrupt sensor to the auto-changer. Each part has a chance of failure. The more parts there are in an auto-changer, the more places that the auto-changer can fail. If the auto-changer could use the existing barcode reader to detect whether a magazine has been properly inserted, the optical interrupt sensor required for each magazine could be eliminated. Therefore there is a need for a system that can detect whether a magazine has been completely inserted into an auto-changer using the existing barcode reader.

**SUMMARY OF THE INVENTION**

A method and apparatus for measuring the insertion distance of a data cartridge magazine in an auto-changer, using a barcode reader.

Other aspects and advantages of the present invention will become apparent from the following detailed description, taken in conjunction with the accompanying drawings, illustrating by way of example the principles of the invention.

**BRIEF DESCRIPTION OF THE DRAWINGS**

Figure 1 is the block diagram of a barcode reader with a target.

Figure 2 is a plain view of a target used to determine the insertion distance of a magazine in an auto-changer in accordance with the present invention.

Figure 3 is a block diagram of the relationships of image height and length to object height and length in a lens system.

Figure 4 is a block diagram of a barcode reader with an object at two locations.

Figure 5 is a block diagram of the calibration fixture in accordance with the present invention.

**DETAILED DESCRIPTION OF THE PREFERRED EMBODIMENT**

An auto-changer that can detect proper magazine insertion using an existing barcode reader can eliminate the optical interrupt sensors typically used for each magazine. By reducing the number of parts required for detecting proper magazine insertion, the cost of the auto-changer goes down and the reliability can go up.

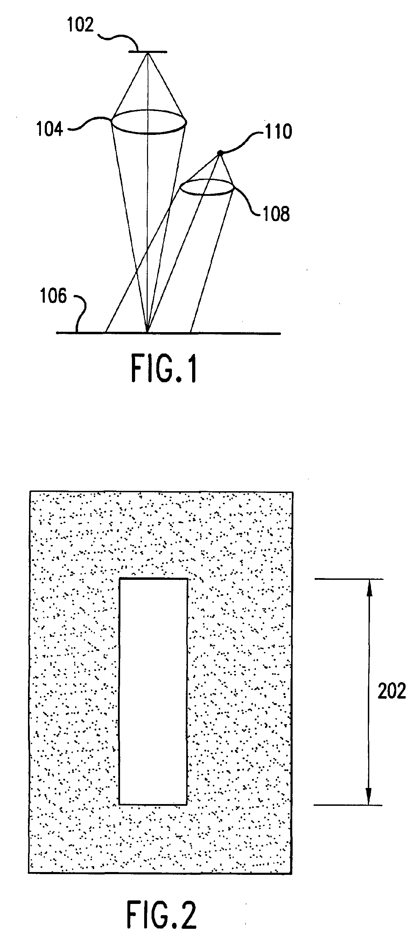

Typically the barcode reader (see figure 1) contained within a jukebox storage device uses a charged coupled device (CCD) (102) to measure the reflected light, a light emitting diode (LED) (110) as the illumination source and two lenses, one lens (108) to focus the light from the LED (110) onto the target (106) and one lens (104) to focus the reflected light from the target (106) onto the CCD (102).

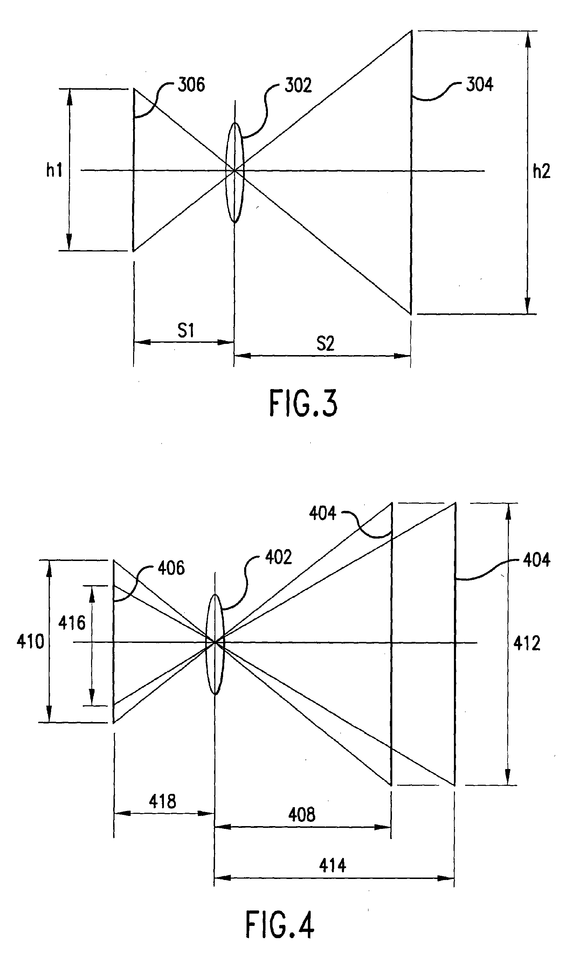

In one embodiment of the current invention a target is attached to each magazine that will be used in the auto-changer. The target (see figure 2) has a feature of a known length (202). In the preferred embodiment the target has a light feature on a dark background. But any contrasting color or reflectance is suitable. To determine if a magazine has been properly inserted, the distance between the barcode reader and the target on the magazine needs to be determined. The auto-changer uses the barcode reader to measure the apparent length of the feature on the target. Using the measured length of the image of the target the distance from the lens to the target can be calculated using the equation $S_2 = \frac{h_2}{h_1} S_1$ (see figure 3). S2 is the distance from the lens (302) to the target (304). S1 is the distance from the lens (302) to the CCD (306). h2 is the known length of the target feature (304) and h1 is the measured length of the target feature (306) projected onto the CCD. Figure 4 shows an optical diagram of a barcode reader with a target in two locations. The lens (402) focuses the image from the target (404) of height 412 onto the CCD (406). When the target is distance 408 from the lens (402) the height of the resulting image on the CCD (406) is length 410. When the target is distance 414 from the lens (402) the height of the resulting image on the CCD (402) is length 416. This shows that as the distance between the barcode reader lens and the target change, the length of the image on the CCD changes.

The calculation of the distance between the barcode reader and the target uses 3 pieces of data h2, h1, and S1. Only h1 (the length of the image of the target on the CCD) is measured each time a magazine is checked for proper insertion. h2 and S1 are properties of the barcode reader and are measured and recorded when the barcode reader is assembled.

The barcode reader is built as a subassembly that can be attached to the jukebox storage device as a unit. The barcode reader subassembly has reference mounting surfaces (506) used to align the barcode reader subassembly with respect to the jukebox storage device. A barcode reader subassembly calibration fixture (calibration fixture) uses the reference mounting surfaces to mount and measure the barcode reader subassembly. The distance from the lens to the CCD is determined using the calibration fixture. The distance from the lens to the CCD is recorded for each barcode reader subassembly. When a barcode reader subassembly is installed into an auto-changer the corresponding recorded distance is entered and stored into the auto-changer. The target feature length is also entered and stored into the auto-changer. Using this information, along with the measured length of the image of the target on the magazine, the auto-changer can calculate the distance from the lens of the barcode reader to the target on the magazine. Once the distance from the barcode reader lens to the target on the magazine has been calculated the calculated distance can be compared to what the distance should be if the magazine was inserted correctly. If the calculated distance is equal to the expected distance, within some tolerance, the magazine has been properly inserted.

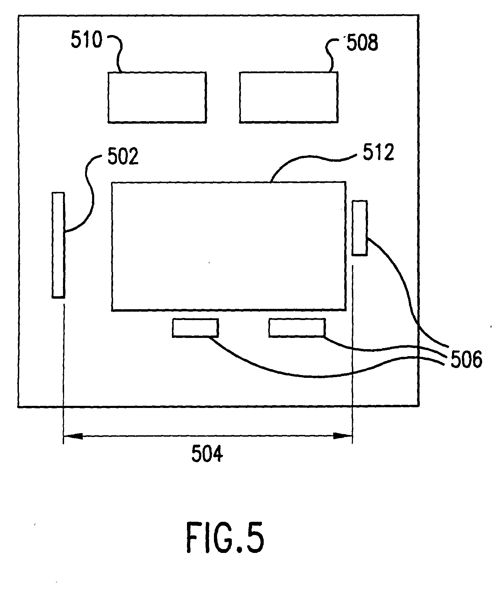

The calibration fixture has a target (502) that is positioned at a known distance (504) from the mounting surfaces (506). Figure 5 shows a simple embodiment of the mounting surfaces for clarity, as one skilled in the art would realize there are many different configurations for mounting surfaces. There is a known distance from the mounting surfaces to the lens in the barcode reader. The calibration fixture also contains the electronics required to read the CCD (508) and the electronics required to drive the LED (510), in the barcode reader subassembly (512). The target (502) has a feature of a known length. With the barcode reader mounted in the calibration fixture the calibration target is imaged onto the CCD of the barcode reader. The image of the calibration target is measured with the CCD. The distance between the lens and the CCD can then be calculated with the equation $S_1 = \frac{h_1}{h_2} S_2$ and recorded for later use.

The foregoing description of the present invention has been presented for purposes of illustration and description. It is not intended to be exhaustive or to limit the invention to the precise form disclosed, and other modifications and variations may be possible in light of the above teachings. For example, the information stored in the auto-changer could be the magnification of the lens system. The distance from the lens to the target would be calculated using the formula $S_2 = \frac{S_1}{M}$ where M is the magnification of the lens system. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

**Claims**

1.  A method of detecting the proper insertion of a data magazine into an auto-changer, comprising:

    measuring a length of a target (412) on an inserted data magazine using an optical system;
    calculating the insertion distance (408/414) of the data magazine;
    comparing the calculated insertion distance with the expected insertion distance to determine if the magazine was properly inserted.

2.  The method of claim 1 further comprising the steps of:

    measuring and saving lens system information from an optical system;
    installing the optical system along with the corresponding lens system information into an auto-changer;
    attaching a target to each data magazine used in the auto-changer, the target having a feature of a known length;
    inserting one of the data magazines into the auto-changer.

3.  The method of claim 2 where the optical system information measured is the distance from the lens to the photo-sensor (418).

4. The method of claim 2 where the optical system information measured is the magnification of the lens system.

5. A system for determining the proper insertion of a data magazine into an auto-changer, comprising:

> an optical system, the optical system having a photo-sensor (102) and a lens (104) to focus light onto the photo-sensor (102), the lens is separated from the photo-sensor by a known length, the optical system installed in the auto-changer;
> a target, the target having a feature of a know length (202), the target is attached to the data magazine;
> a memory device, used to store an expected insertion distance, the known feature length, and the known distance from the lens to the photo-sensor;
> a processor, the processor used to calculate a measured insertion length and to compare the calculated insertion length with the expected insertion length.

102

104

110

108

106

FIG.1

202

FIG.2

FIG.3

FIG.4

FIG.5

**European Patent Office**

## EUROPEAN SEARCH REPORT

Application Number

EP 01 30 1660

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 303 034 A (MOY MICHAEL E ET AL) 12 April 1994 (1994-04-12) | 1 | G11B17/22 G11B15/68 |
| Y | * column 8, line 11 - line 23; figures 11,12 * | 2-5 | |
| Y | PATENT ABSTRACTS OF JAPAN vol. 007, no. 057 (P-181), 9 March 1983 (1983-03-09) & JP 57 204409 A (NAGOYA DENKI KOGYO KK), 15 December 1982 (1982-12-15) * abstract * | 2-5 | |
| X | US 4 412 746 A (YOKOUCHI HIROTAKA) 1 November 1983 (1983-11-01) * column 5, line 29 - column 6, line 34; figures 4,5 * | 5 | |
| A | US 5 946 160 A (OHASHI HIROKI) 31 August 1999 (1999-08-31) * abstract * | 1-5 | |
| A | US 5 426 581 A (KISHI GREGORY T ET AL) 20 June 1995 (1995-06-20) * the whole document * | 1-5 | TECHNICAL FIELDS SEARCHED (Int.Cl.7) G11B G01B G01C |

The present search report has been drawn up for all claims

| Place of search | Date of completion of the search | Examiner |
|---|---|---|
| THE HAGUE | 13 June 2001 | Sozzi, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 128 377 A1

## ANNEX TO THE EUROPEAN SEARCH REPORT
## ON EUROPEAN PATENT APPLICATION NO.

EP 01 30 1660

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2001

| Patent document cited in search report | | Publication date | Patent family member(s) | | Publication date |
|---|---|---|---|---|---|
| US 5303034 | A | 12-04-1994 | NONE | | |
| JP 57204409 | A | 15-12-1982 | NONE | | |
| US 4412746 | A | 01-11-1983 | JP 1317621 C | | 29-05-1986 |
| | | | JP 57022506 A | | 05-02-1982 |
| | | | JP 60049841 B | | 05-11-1985 |
| US 5946160 | A | 31-08-1999 | JP 10134458 A | | 22-05-1998 |
| US 5426581 | A | 20-06-1995 | NONE | | |

EPO FORM P0459

For more details about this annex : see Official Journal of the European Patent Office, No. 12/82

9